# EUROPEAN PATENT APPLICATION

(11) **EP 4 636 020 A1**
(43) Date of publication of application: **22.10.2025**
(21) Application number: 23903631.2
(22) Date of filing: 05.04.2023
(51) Int. Cl.: C08L 3/02, C08L 101/12, C08L 67/04, C08L 67/02, C08K 5/09, C08K 5/092, C08K 5/053, C08J 5/18, B29B 9/12, B29B 11/10

(54) **METHOD FOR PREPARING BIODEGRADABLE RESIN COMPOSITION USING COMPOSITE COMPATIBILIZER AND BIOMASS-BASED BIODEGRADABLE RESIN COMPOSITION PREPARED THEREBY**

(30) Priority: 14.12.2022 KR 20220174627
(71) Applicant: Daesang Corporation, Seoul 03130 (KR)
(72) Inventor: LEE, Seul Gi, Seoul 07789 (KR); HUR, Sung Hwa, Seoul 07789 (KR); KIM, Se Wook, Seoul 07789 (KR); LEE, Ae Ra, Seoul 07789 (KR); SEO, Tae Rang, Seoul 07789 (KR); HAM, Choong Hyun, Seoul 07789 (KR)
(74) Representative: Schiweck Weinzierl Koch Patentanwälte Partnerschaft mbB
(86) International application number: PCT/KR2023/004585
(87) International publication number: WO 2024/128425

(57) **Abstract**

The present invention relates to a method for preparing a biomass-based biodegradable resin composition using a composite compatibilizer, and a biodegradable resin composition having an improved melt flow index and a biodegradable film having excellent mechanical properties produced thereby.

## Description

### [Technical Field]

The present invention relates to a method of preparing a biomass-based biodegradable resin composition, and more specifically, to a method of preparing a biomass-based biodegradable resin composition using a composite compatibilizer, and a biodegradable resin composition having improved melt flowability and a biodegradable film having excellent mechanical properties, which are manufactured thereby.

### [Background Art]

Biodegradable polymers can be classified into petroleum-derived biodegradable polymers and bio-derived biodegradable polymers, and there is relatively high interest in bio-derived polymers that are environmentally friendly and renewable. Polymers that are fully biodegradable in the Earth's environment contain functional groups that can be degraded by microorganisms in their main chain structure. Among these polymers, polyester-based polymers are the most studied because they have excellent processability and the control of biodegradability is easy. For example, polylactic acid (PLA) is a bio-derived biodegradable polymer synthesized based on lactic acid obtained by fermenting corn starch and has a global market size of about 100,000 tons, and the application field thereof is expanding to general plastics such as food packaging and containers, electronic product cases, and the like. However, since PLA resins lack moldability, mechanical strength, and heat resistance, breakage easily occurs in thin-film products. Also, since they have low resistance to temperature, molded products deform when the external temperature rises.

In addition, polybutylene adipate-co-terephthalate (PBAT), which is the most commonly used petroleum-derived biodegradable polyester-based polymer, is a copolymer resin containing aliphatic and aromatic groups and has relatively excellent mechanical properties and processability, but there are disadvantages such as weak structural strength and high manufacturing costs. To address the above-described disadvantages of polyester resins, that is, to improve poor physical properties and reduce the high manufacturing cost compared to the manufacturing cost of non-biodegradable polymers, various research methods for manufacturing composite materials by including biomass, which is an environmentally friendly material, have been proposed.

In response, development has been made to reduce costs and improve biodegradability by mixing biodegradable resins with starch which is a typical plant biomass. However, the application of starch in biodegradable resins generally has problems in that the amount of starch added is limited and product quality is degraded due to the inherent hydrophilicity of starch and the degradation of physical properties resulting from poor processability.

In order to solve the above problems, various attempts have been made to impart thermoplasticity by reacting starch with plasticizers and the like and manufacture composite materials by mixing the starch with biodegradable resins, but they have not yet satisfied the standards of industrial sites. Therefore, there is a demand for the development of environmentally friendly materials that can satisfy biodegradability, mechanical properties, and economic efficiency at the same time.

### [Disclosure]

### [Technical Problem]

The present invention is directed to providing a method of preparing a biomass-based biodegradable resin composition having excellent melt flowability.

The present invention is also directed to providing a biodegradable resin composition having improved melt flowability, which is prepared from a biomass composite including starch by introducing a composite compatibilizer of two or more types.

The present invention is also directed to providing an environmentally friendly biodegradable film having excellent biodegradability and mechanical properties.

### [Technical Solution]

In order to address the above technical challenges, one aspect provides a method of preparing a biomass-based biodegradable resin composition, which includes preparing a biomass composite by reacting starch, a plasticizer, a compatibilizer including two types of dicarboxylic acids, and a reaction initiator; and mixing the biomass composite with a biodegradable resin.

In an embodiment, the compatibilizer may include maleic anhydride and tartaric acid. In an embodiment, based on a total weight of the biomass composite, the content of the maleic anhydride may be 0.3 to 3 wt%, and the content of the tartaric acid may be 0.1 to 2 wt%. The compatibilizer may further include a styrene-unsaturated dicarboxylic acid copolymer or a styrene-unsaturated dicarboxylic anhydride copolymer in an amount of 0.05 to 2.5 wt%.

In an embodiment, based on the total weight of the biomass composite, the content of the starch may range from 70 to 90 wt%, the content of the plasticizer may range from 5 to 20 wt%, the content of the composite compatibilizer of two types may range from 0.1 to 5 wt%, and the content of the reaction initiator may range from 0.1 to 1 wt%.

In an embodiment, based on the total weight of the biomass composite, the content of the starch may range from 75 to 90 wt%, the content of the plasticizer may range from 5 to 20 wt%, the content of the composite compatibilizer of two types may range from 0.1 to 5 wt%, and the content of the reaction initiator may range from 0.1 to 1 wt%.

According to an embodiment, the biomass composite may have a melt flow index ranging from 0.01 to 500 g/min, 200 °C.

According to an embodiment, 20 to 40 wt% of the biomass composite and 60 to 80 wt% of the biodegradable resin may be mixed to prepare a biomass-based biodegradable resin composition.

The plasticizer may be, for example, at least one selected from the group consisting of glycerin, ethylene glycol, sorbitol, and pentaerythritol, but is not limited thereto.

The starch may be, for example, at least one selected from the group consisting of corn starch, waxy corn starch, rice starch, potato starch, tapioca starch, wheat starch, sweet potato starch, and a modified starch thereof, but is not limited thereto.

The reaction initiator may be, for example, at least one peroxide-based reaction initiator selected from the group consisting of benzoyl peroxide, acetyl peroxide, dilauryl peroxide, di-t-butyl peroxide, cumyl peroxide, di-t-butyl hydroperoxide, dibenzoyl peroxide, succinic acid peroxide, dilaurylyl peroxide, didecanoyl peroxide, dicumyl peroxide, 2,5-dimethyl-2,5-di(t-butylperoxy)hexane, α-cumyl peroxyneodecarbonate, 1,1-dimethyl-3-hydroxybutylperoxy-2-ethylhexanoate, t-amyl peroxybenzoate, t-butyl peroxypivalate, 2,5-dihydroxyperoxy-2,5-dimethylhexane, cumene hydroperoxide, and 1,3-bis(t-butylperoxyisopropyl)benzene, but is not limited thereto .

The biodegradable resin may be, for example, at least one selected from the group consisting of polylactic acid, polybutylene adipate terephthalate, polybutylene succinate, polycaprolactone, polyglycolic acid, polyhydroxyalkanoate, polyhydroxybutylate, a copolymer thereof, and a mixture thereof, but is not limited thereto.

According to an embodiment, the preparation of the biomass composite may further include extruding the biomass composite into pellets.

According to an embodiment, the mixing of the biomass composite pellets with the biodegradable resin may further include extruding a resin mixture into pellets.

Another aspect provides a biomass-based biodegradable resin composition prepared by the above-described method.

Still another aspect provides a biodegradable film manufactured using the above-described biomass-based biodegradable resin composition.

According to an embodiment, the biodegradable film may have a tensile strength ranging from 27 to 30 N/mm².

According to an embodiment, the biodegradable film may have a tear strength ranging from 96 to 131 N/mm.

According to an embodiment, the biodegradable film may have an elongation ranging from 580 to 670%.

### [Advantageous Effects]

Starch-containing biomass composites, which are prepared using reactive extrusion technology in a compatibilization system optimized according to the present invention, can have improved melt flowability compared to conventional thermoplastic starch. Therefore, when biomass composites having excellent melt flowability are mixed with biodegradable resins to manufacture flexible films, the mechanical properties of the films can be improved.

### [Modes of the Invention]

Hereinafter, the present invention will be described in more detail with reference to embodiments. However, the following embodiments are presented as examples to help understand the present invention and are not intended to limit the scope of the present invention. The present invention may be subject to various modifications and may be embodied in many different forms, and is to be understood to include all modifications, equivalents, or substitutes that fall within the spirit and technical scope of the present invention.

In addition, unless otherwise defined, all terms used herein, including technical or scientific terms, have the same meaning as commonly understood by those skilled in the art to which the present invention pertains. Terms such as those defined in commonly used dictionaries are to be construed to have meanings consistent with their meaning in the context of the relevant art and are not to be construed in an idealized or overly formal sense unless expressly defined in the present application.

Specifically, according to one aspect of the present invention, a method of preparing a biomass-based biodegradable resin composition includes preparing a biomass composite by reacting starch, a plasticizer, a composite compatibilizer including two types of dicarboxylic acids, and a reaction initiator; and mixing the biomass composite with a biodegradable resin.

According to an embodiment, the composite compatibilizer may include maleic anhydride and tartaric acid. In an embodiment, based on the total weight of the biomass composite, the content of the maleic anhydride is 0.3 to 3 wt%, and the content of the tartaric acid is 0.1 to 2 wt%. In addition, the compatibilizer may further include 0.05 to 2.5 wt% of a styrene-unsaturated dicarboxylic acid copolymer or a styrene-unsaturated dicarboxylic anhydride copolymer.

When the maleic anhydride content is less than 0.1 wt%, the compatibilization effect is not significant, and when the maleic anhydride content exceeds 3 wt%, the physical properties, such as the melt flow index and color, of the biomass composite are significantly changed.

When the tartaric acid content is less than 0.1 wt%, the compatibilization effect is not significant, and when the tartaric acid content exceeds 2 wt%, the physical properties, such as the melt flow index and color, of the biomass composite are significantly changed. As the tartaric acid content increases, the processability of the biomass composite is degraded, and surface stickiness increases, thereby causing the degradation of the mechanical properties of a film.

In addition to maleic anhydride and tartaric acid, the composite compatibilizer may further include a styrene-unsaturated dicarboxylic acid copolymer or a styrene- unsaturated dicarboxylic anhydride copolymer. For example, at least one selected from the group consisting of a styrene-maleic acid copolymer, a styrene-fumaric acid copolymer, a styrene-acetylenedicarboxylic acid copolymer, a styrene-glutaconic acid copolymer, a styrene-2-decenedioic acid copolymer, a styrene-traumatic acid copolymer, a styrene-muconic acid copolymer, a styrene-glutic acid copolymer, a styrene-citraconic acid copolymer, a styrene-mesaconic acid copolymer, a styrene-itaconic acid copolymer, a styrene-maleic anhydride copolymer, a styrene-fumaric anhydride copolymer, a styrene-acetylenedicarboxylic anhydride copolymer, a styrene-glutaconic anhydride copolymer, a styrene-2-decenedioic anhydride copolymer, a styrene-traumatic anhydride copolymer, a styrene-muconic anhydride copolymer, a styrene-glutic anhydride copolymer, a styrene-citraconic anhydride copolymer, a styrene-mesaconic anhydride copolymer, and a styrene-itaconic anhydride copolymer may be used.

In an embodiment, based on the total weight of the biomass composite, the content of the starch may range from 70 to 90 wt%, the content of the plasticizer may range from 5 to 20 wt%, the content of the composite compatibilizer of two types may range from 0.1 to 5 wt%, and the content of the reaction initiator may range from 0.1 to 1 wt%.

In another embodiment, based on the total weight of the biomass composite, the content of the starch may range from 75 to 90 wt%, the content of the plasticizer may range from 5 to 20 wt%, the content of the composite compatibilizer of two types may range from 0.1 to 5 wt%, and the content of the reaction initiator may range from 0.1 to 1 wt%.

When less than 70 wt% of the starch is used, the raw materials excluding starch may be excessively used, which increases costs and makes it uneconomical. When more than 90 wt% of the starch is used, some starch may remain unplasticized, which degrades physical properties in the manufacture of thermoplastic starch and a biodegradable composite resin.

When less than 5 wt% of the plasticizer is used, the starch may not be sufficiently plasticized, and when more than 20 wt% of the plasticizer is used, the plasticizer may be eluted during film application due to excessive use.

When the compatibilizer is used in a small amount of less than 0.1 wt%, the effect is not significant, and when more than 5 wt% of the compatibilizer is used, physical properties such as color and a melt flow index are significantly changed due to excessive use.

When less than 0.1 wt% of the reaction initiator is used, reactivity between the raw materials may be insufficient, and when more than 1 wt% of the reaction initiator is used, an unreacted initiator may remain, which decreases the numerical limitation of the biomass composite.

According to an embodiment, the biomass composite may have a melt flow index ranging from 0.01 to 500 g/min, 200 °C.

When the melt flow index is less than 0.01 g/min, 200 °C, low flowability is exhibited, and the processability of the biomass composite is significantly degraded, which makes it impossible to manufacture. When the melt flow index exceeds 500 g/min, 200 °C, it is not suitable for extrusion molding and degrades the mechanical properties of a film.

After the biomass composite including starch is prepared using the composite compatibilizer of two types, the biomass composite is mixed with a biodegradable resin to prepare a biodegradable resin composition. In this case, the biomass-based biodegradable resin composition may be prepared by mixing 20 to 40 wt% of the biomass composite and 60 to 80 wt% of the biodegradable resin. When the biomass composite including starch is prepared using the composite compatibilizer of two types according to the present invention, melt flowability is improved, and thus the content of starch in the resin composition may increase, thereby satisfying the characteristics of an environmentally friendly product.

By applying a compatibilization system that is capable of controlling melt flowability, a higher level of melt flowability than conventional thermoplastic starch and a similar level of melt flowability to that of a biodegradable resin (molecular weight: starch>biodegradable resin) are secured. High melt flowability greatly affects the mechanical strength of a film.

The plasticizer that can be used in an embodiment may be, for example, at least one selected from the group consisting of glycerin, ethylene glycol, sorbitol, and pentaerythritol, but is not limited thereto.

The starch that can be used in an embodiment may be, for example, at least one selected from the group consisting of corn starch, waxy corn starch, rice starch, potato starch, tapioca starch, wheat starch, sweet potato starch, and a modified starch thereof, but is not limited thereto.

The reaction initiator that can be used in an embodiment may be, for example, at least one peroxide-based reaction initiator selected from the group consisting of benzoyl peroxide, acetyl peroxide, dilauryl peroxide, di-t-butyl peroxide, cumyl peroxide, di-t-butyl hydroperoxide, dibenzoyl peroxide, succinic acid peroxide, dilaurylyl peroxide, didecanoyl peroxide, dicumyl peroxide, 2,5-dimethyl-2,5-di(t-butylperoxy)hexane, α-cumyl peroxyneodecarbonate, 1,1-dimethyl-3-hydroxybutylperoxy-2-ethylhexanoate, t-amyl peroxybenzoate, t-butyl peroxypivalate, 2,5-dihydroxyperoxy-2,5-dimethylhexane, cumene hydroperoxide, and 1,3-bis(t-butylperoxyisopropyl)benzene, but is not limited thereto.

The biodegradable resin that can be used may be, for example, at least one selected from the group consisting of polylactic acid (PLA), polybutylene adipate terephthalate (PBAT), polybutylene succinate (PBS), polycaprolactone (PCL), polyglycolic acid (PGA), polyhydroxyalkanoate (PHA), polyhydroxybutylate (PHB), a copolymer thereof, and a mixture thereof, but is not limited thereto.

According to another embodiment of the present invention, the preparation of the biomass composite may further include extruding the biomass composite into pellets. In addition, the mixing of the biomass composite pellets with the biodegradable resin may further include extruding a resin mixture into pellets, and the resulting pellets may be input into a film forming machine to manufacture a biodegradable film.

According to another aspect of the present invention, a biomass-based biodegradable resin composition prepared by the above-described method and a biodegradable film manufactured using the biodegradable resin composition are provided.

Hereinafter, the present invention will be described in more detail through examples and comparative examples.

### [Example 1-1]

### 1) Preparation of biomass composite

85 parts by weight of corn starch and 15 parts by weight of glycerin were mixed and input into a heating mixer. Subsequently, maleic anhydride was added in an amount of 0.5 wt% relative to the mixture weight. A temperature of the heating mixer was raised to 50 to 60 °C, and then mixing was performed for 4 hours.

Polylactic acid (PLA) was added in an amount of 6 wt% relative to the mixture weight to the mixture. The homogeneously mixed composition was input into a twin-screw extruder. An extruder barrel temperature was 180 to 185 °C, a main screw speed was 300 rpm, and a raw material feeding speed was 20 rpm. The extrudate was pelletized to prepare a biomass composite.

### 2) Preparation of biodegradable resin composition

30 parts by weight of the prepared biomass composite and 70 parts by weight of polybutylene adipate terephthalate (PBAT) were mixed. The homogeneously mixed composition was input into a twin-screw extruder. An extruder barrel temperature was 175 to 180 °C, a main screw speed was 415 to 420 rpm, and a raw material feeding speed was 110 to 120 rpm. The extrudate ejected through an extruder die was water-cooled and pelletized by installing a water channel.

The pellets were dried at 60 °C for 24 hours or more to prepare a biomass-based biodegradable resin composition.

### 3) Manufacture of biodegradable film

The biodegradable resin composition was input into a film forming machine to manufacture a biodegradable film. A film forming machine temperature was 150 to 160 °C, and a raw material feeding speed was 900 to 1100 rpm.

### [Example 1-2]

### 1) Preparation of biomass composite

85 parts by weight of corn starch and 15 parts by weight of glycerin were mixed and input into a heating mixer. Subsequently, benzaldehyde was added in an amount of 0.5 wt% relative to the mixture weight. A temperature of the heating mixer was raised to 50 to 60 °C, and then mixing was performed for 4 hours.

PLA was added in an amount of 6 wt% relative to the mixture weight to the mixture. The homogeneously mixed composition was input into a twin-screw extruder. An extruder barrel temperature was 180 to 185 °C, a main screw speed was 300 rpm, and a raw material feeding speed was 20 rpm. The extrudate was pelletized to prepare a biomass composite.

2) Preparation of biodegradable resin composition and 3) Manufacture of biodegradable film were performed in the same manner as in Example 1.

### [Example 1-3]

### 1) Preparation of biomass composite

85 parts by weight of corn starch and 15 parts by weight of glycerin were mixed and input into a heating mixer. Subsequently, tartaric acid was added in an amount of 0.5 wt% relative to the mixture weight. A temperature of the heating mixer was raised to 50 to 60 °C, and then mixing was performed for 4 hours.

PLA was added in an amount of 6 wt% relative to the mixture weight to the mixture. The homogeneously mixed composition was input into a twin-screw extruder. An extruder barrel temperature was 180 to 185 °C, a main screw speed was 300 rpm, and a raw material feeding speed was 20 rpm. The extrudate was pelletized to prepare a biomass composite.

2) Preparation of biodegradable resin composition and 3) Manufacture of biodegradable film were performed in the same manner as in Example 1.

### [Example 1-4]

### 1) Preparation of biomass composite

85 parts by weight of corn starch and 15 parts by weight of glycerin were mixed and input into a heating mixer. Subsequently, maleic anhydride and tartaric acid were each added in an amount of 0.5 wt% relative to the mixture weight. A temperature of the heating mixer was raised to 50 to 60 °C, and then mixing was performed for 4 hours.

PLA was added in an amount of 6 wt% relative to the mixture weight to the mixture. The homogeneously mixed composition was input into a twin-screw extruder. An extruder barrel temperature was 180 to 185 °C, a main screw speed was 300 rpm, and a raw material feeding speed was 20 rpm. The extrudate was pelletized to prepare a biomass composite.

2) Preparation of biodegradable resin composition and 3) Manufacture of biodegradable film were performed in the same manner as in Example 1.

### [Example 1-5]

### 1) Preparation of biomass composite

85 parts by weight of corn starch and 15 parts by weight of glycerin were mixed and input into a heating mixer. Subsequently, maleic anhydride and tartaric acid were added in amounts of 0.5 wt% and 0.8 wt% relative to the mixture weight, respectively. A temperature of the heating mixer was raised to 50 to 60 °C, and then mixing was performed for 4 hours.

PLA was added in an amount of 6 wt% relative to the mixture weight to the mixture. The homogeneously mixed composition was input into a twin-screw extruder. An extruder barrel temperature was 180 to 185 °C, a main screw speed was 300 rpm, and a raw material feeding speed was 20 rpm. The extrudate was pelletized to prepare a biomass composite.

2) Preparation of biodegradable resin composition and 3) Manufacture of biodegradable film were performed in the same manner as in Example 1.

### [Comparative Example 1]

### 1) Preparation of biomass composite

85 parts by weight of corn starch and 15 parts by weight of glycerin were mixed and input into a heating mixer. Subsequently, maleic anhydride and benzaldehyde were added in amounts of 0.5 wt% and 0.1 wt% relative to the mixture weight, respectively. A temperature of the heating mixer was raised to 50 to 60 °C, and then mixing was performed for 4 hours.

PLA was added in an amount of 6 wt% relative to the mixture weight to the mixture. The homogeneously mixed composition was input into a twin-screw extruder. An extruder barrel temperature was 180 to 185 °C, a main screw speed was 300 rpm, and a raw material feeding speed was 20 rpm. The extrudate was pelletized to prepare a biomass composite.

### 2) Preparation of biodegradable resin composition

30 parts by weight of the prepared thermoplastic starch and 70 parts by weight of PBAT were mixed. The homogeneously mixed composition was input into a twin-screw extruder. An extruder barrel temperature was 175 to 180 °C, a main screw speed was 415 to 420 rpm, and a raw material feeding speed was 110 to 120 rpm. The extrudate ejected through an extruder die was water-cooled and pelletized by installing a water channel.

The pellets were dried at 60 °C for 24 hours or more to prepare a biomass-based biodegradable resin composition.

### 3) Manufacture of biodegradable film

The biodegradable resin composition was input into a film forming machine to manufacture a biodegradable film. A film forming machine temperature was 150 to 160 °C, and a raw material feeding speed was 900 to 1100 rpm.

### [Comparative Example 2]

### 1) Preparation of biomass composite

85 parts by weight of corn starch and 15 parts by weight of glycerin were mixed and input into a heating mixer. Subsequently, maleic anhydride and benzaldehyde were added in amounts of 0.5 wt% and 0.1 wt% relative to the mixture weight, respectively. A temperature of the heating mixer was raised to 50 to 60 °C, and then mixing was performed for 4 hours.

PBAT was added in an amount of 6 wt% relative to the mixture weight to the mixture. The homogeneously mixed composition was input into a twin-screw extruder. An extruder barrel temperature was 180 to 185 °C, a main screw speed was 300 rpm, and a raw material feeding speed was 20 rpm. The extrudate was pelletized to prepare a biomass composite.

2) Preparation of biodegradable resin composition and 3) Manufacture of biodegradable film were performed in the same manner as in Comparative Example 1.

### [Example 2-1]

### 1) Preparation of biomass composite

85 parts by weight of corn starch and 15 parts by weight of glycerin were mixed and input into a heating mixer. Subsequently, maleic anhydride and tartaric acid were added in amounts of 0.3 wt% and 0.2 wt% relative to the mixture weight, respectively. A temperature of the heating mixer was raised to 50 to 60 °C, and then mixing was performed for 4 hours.

PBAT was added in an amount of 6 wt% relative to the mixture weight to the mixture. The homogeneously mixed composition was input into a twin-screw extruder. An extruder barrel temperature was 180 to 185 °C, a main screw speed was 300 rpm, and a raw material feeding speed was 20 rpm. The extrudate was pelletized to prepare a biomass composite.

2) Preparation of biodegradable resin composition and 3) Manufacture of biodegradable film were performed in the same manner as in Example 1.

### [Example 2-2]

### 1) Preparation of biomass composite

85 parts by weight of corn starch and 15 parts by weight of glycerin were mixed and input into a heating mixer. Subsequently, maleic anhydride and tartaric acid were added in amounts of 0.2 wt% and 0.3 wt% relative to the mixture weight, respectively. A temperature of the heating mixer was raised to 50 to 60 °C, and then mixing was performed for 4 hours.

PBAT was added in an amount of 6 wt% relative to the mixture weight to the mixture. The homogeneously mixed composition was input into a twin-screw extruder. An extruder barrel temperature was 180 to 185 °C, a main screw speed was 300 rpm, and a raw material feeding speed was 20 rpm. The extrudate was pelletized to prepare a biomass composite.

2) Preparation of biodegradable resin composition and 3) Manufacture of biodegradable film were performed in the same manner as in Example 1.

### [Example 2-3]

### 1) Preparation of biomass composite

85 parts by weight of corn starch and 15 parts by weight of glycerin were mixed and input into a heating mixer. Subsequently, maleic anhydride and tartaric acid were added in amounts of 0.4 wt% and 0.2 wt% relative to the mixture weight, respectively. A temperature of the heating mixer was raised to 50 to 60 °C, and then mixing was performed for 4 hours.

PBAT was added in an amount of 6 wt% relative to the mixture weight to the mixture. The homogeneously mixed composition was input into a twin-screw extruder. An extruder barrel temperature was 180 to 185 °C, a main screw speed was 300 rpm, and a raw material feeding speed was 20 rpm. The extrudate was pelletized to prepare a biomass composite.

2) Preparation of biodegradable resin composition and 3) Manufacture of biodegradable film were performed in the same manner as in Example 1.

### [Example 2-4]

### 1) Preparation of biomass composite

85 parts by weight of corn starch and 15 parts by weight of glycerin were mixed and input into a heating mixer. Subsequently, maleic anhydride and tartaric acid were each added in an amount of 0.3 wt% relative to the mixture weight. A temperature of the heating mixer was raised to 50 to 60 °C, and then mixing was performed for 4 hours.

PBAT was added in an amount of 6 wt% relative to the mixture weight to the mixture. The homogeneously mixed composition was input into a twin-screw extruder. An extruder barrel temperature was 180 to 185 °C, a main screw speed was 300 rpm, and a raw material feeding speed was 20 rpm. The extrudate was pelletized to prepare a biomass composite.

2) Preparation of biodegradable resin composition and 3) Manufacture of biodegradable film were performed in the same manner as in Example 1.

### [Example 2-5]

### 1) Preparation of biomass composite

85 parts by weight of corn starch and 15 parts by weight of glycerin were mixed and input into a heating mixer. Subsequently, maleic anhydride and tartaric acid were added in amounts of 0.2 wt% and 0.4 wt% relative to the mixture weight, respectively. A temperature of the heating mixer was raised to 50 to 60 °C, and then mixing was performed for 4 hours.

PBAT was added in an amount of 6 wt% relative to the mixture weight to the mixture. The homogeneously mixed composition was input into a twin-screw extruder. An extruder barrel temperature was 180 to 185 °C, a main screw speed was 300 rpm, and a raw material feeding speed was 20 rpm. The extrudate was pelletized to prepare a biomass composite.

2) Preparation of biodegradable resin composition and 3) Manufacture of biodegradable film were performed in the same manner as in Example 1.

### [Example 2-6]

### 1) Preparation of biomass composite

85 parts by weight of corn starch and 15 parts by weight of glycerin were mixed and input into a heating mixer. Subsequently, maleic anhydride and tartaric acid were added in amounts of 0.3 wt% and 0.4 wt% relative to the mixture weight, respectively. A temperature of the heating mixer was raised to 50 to 60 °C, and then mixing was performed for 4 hours.

PBAT was added in an amount of 6 wt% relative to the mixture weight to the mixture. The homogeneously mixed composition was input into a twin-screw extruder. An extruder barrel temperature was 180 to 185 °C, a main screw speed was 300 rpm, and a raw material feeding speed was 20 rpm. The extrudate was pelletized to prepare a biomass composite.

2) Preparation of biodegradable resin composition and 3) Manufacture of biodegradable film were performed in the same manner as in Example 1.

### [Evaluation Examples]

The composition of the biomass-based biodegradable resin compositions prepared in the examples and the comparative examples and the mechanical properties of the films manufactured using the resin compositions are shown in Table 1 below.

Various mechanical properties of the biodegradable films were measured as follows. The biodegradable films were cut into 10 mm-wide pieces according to the KSS M1008 standard to prepare specimens, and the film thickness was recorded using a thickness gauge. The tensile strength, elongation, and tear strength of the prepared specimens were measured using an Instron tensile testing machine. Conditions for the tensile test included a grip distance of 60 mm and a test speed of 500 mm/min.

**[Table 1]**

| Classification | | | Biodegradable resin (PLA) 6% | | | | | |
|---|---|---|---|---|---|---|---|---|
| | | | Comparativ e Example 1 | Exampl e 1-1 | Example 1-2 | Exampl e 1-3 | Exampl e 1-4 | Exampl e 1-5 |
| Total compatibilizer content (%) | | | 0.6 | 0.5 | 0.5 | 0.5 | 1.0 | 1.3 |
| Compatibilize r | MA | | 0.5 | 0.5 | | | 0.5 | 0.5 |
| | BA | | 0.1 | | 0.5 | | | |
| | TA | | | | | 0.5 | 0.5 | 0.8 |
| GTPS | Melt flow index (g/10 min) | | 6 | 10 | N/A | 111 | 361 | 360 |
| Compound | Tensile strength (N/mm²) | | 13 | 16 | Not manufacture d | 16 | 18 | 16 |
| Film (MD) | Tensile strength (N/mm²) | | 21 | 24 | | 30 | 30 | 27 |
| | Elongation (%) | | 409 | 351 | | 489 | 603 | 667 |
| | Water immersion elusion (%) | | 6 | 7 | | 9 | 12 | 14 |
| | Chromaticit y | L* (lightness ) | 89 | 84 | | 82 | 86 | 85 |
| | | b* (yellow-blue) | 14 | 17 | | 17 | 17 | 19 |

| | | | | | | | | |
|---|---|---|---|---|---|---|---|---|
| -MA: Maleic anhydride, BA: Benzaldehyde, TA: Tartaric acid | | | | | | | | |

**[Table 2]**

| Classification | | | Biodegradable resin (PBAT) 6% | | | | | | |
|---|---|---|---|---|---|---|---|---|---|
| | | | Comparativ e Example 2 | Exampl e 2-1 | Exampl e 2-2 | Exampl e 2-3 | Exampl e 2-4 | Exampl e 2-5 | Exampl e 2-6 |
| Total compatibilizer content (%) | | | 0.6 | 0.5 | | 0.6 | | | 0.7 |
| Compatibiliz er | MA | | 0.5 | 0.3 | 0.2 | 0.4 | 0.3 | 0.2 | 0.3 |
| | BA | | 0.1 | | | | | | |
| | TA | | | 0.2 | 0.3 | 0.2 | 0.3 | 0.4 | 0.4 |
| GTPS | Melt flow index (g/10 min) | | 3 | 21 | 24 | 26 | 37 | 41 | 69 |
| Compound | Tensile strength (N/mm²) | | 17 | 15 | 16 | 17 | 18 | 18 | 17 |
| Film (MD) | Tensile strength (N/mm²) | | 28 | 30 | 28 | 29 | 29 | 26 | 30 |
| | Elongation (%) | | 566 | 666 | 601 | 637 | 605 | 582 | 618 |
| | Water immersion elution (%) | | 6 | 4 | 4 | 5 | 6 | 7 | 7 |
| | Chromaticity | L* (lightness ) | 84 | 84 | 85 | 86 | 85 | 84 | 84 |
| | | b* (yellow-blue) | 17 | 18 | 17 | 17 | 17 | 17 | 18 |

| | | | | | | | | | |
|---|---|---|---|---|---|---|---|---|---|
| -MA: Maleic anhydride, BA: Benzaldehyde, TA: Tartaric acid | | | | | | | | | |

As shown in the above tables, it can be confirmed that the mechanical properties, such as tensile strength and tear strength, of the biodegradable films manufactured using the composite compatibilizer of maleic anhydride and tartaric acid according to Examples 2-1 to 2-4 were significantly improved, and the water immersion elution results were also improved.

## Claims

1. A method of preparing a biomass-based biodegradable resin composition, the method comprising:
preparing a biomass composite by reacting starch, a plasticizer, a compatibilizer including two types of dicarboxylic acids, and a reaction initiator; and
mixing the biomass composite with a biodegradable resin.

2. The method of claim 1, wherein the compatibilizer includes maleic anhydride and tartaric acid.

3. The method of claim 2, wherein based on a total weight of the biomass composite,
the content of the maleic anhydride is 0.3 to 3 wt%, and
the content of the tartaric acid is 0.1 to 2 wt%.

4. The method of claim 1, wherein based on the total weight of the biomass composite,
the content of the starch is 75 to 90 wt%,
the content of the plasticizer is 5 to 20 wt%,
the content of the composite compatibilizer of two types is 0.1 to 5 wt%, and
the content of the reaction initiator is 0.01 to 1 wt%.

5. The method of claim 1, wherein the biomass composite has a melt flow index ranging from 0.01 to 500 g/min, 200 °C.

6. The method of claim 1, wherein 20 to 40 wt% of the biomass composite and 60 to 80 wt% of the biodegradable resin are mixed.

7. The method of claim 1, wherein the plasticizer is one or more selected from the group consisting of glycerin, ethylene glycol, sorbitol, and pentaerythritol.

8. The method of claim 1, wherein the starch is one or more selected from the group consisting of corn starch, waxy corn starch, rice starch, potato starch, tapioca starch, wheat starch, sweet potato starch, and a modified starch thereof.

9. The method of claim 1, wherein the reaction initiator is one or more peroxide-based reaction initiators selected from the group consisting of benzoyl peroxide, acetyl peroxide, dilauryl peroxide, di-t-butyl peroxide, cumyl peroxide, di-t-butyl hydroperoxide, dibenzoyl peroxide, succinic acid peroxide, dilaurylyl peroxide, didecanoyl peroxide, dicumyl peroxide, 2,5-dimethyl-2,5-di(t-butylperoxy)hexane, α-cumyl peroxyneodecarbonate, 1,1-dimethyl-3-hydroxybutylperoxy-2-ethylhexanoate, t-amyl peroxybenzoate, t-butyl peroxypivalate, 2,5-dihydroxyperoxy-2,5-dimethylhexane, cumene hydroperoxide, and 1,3-bis(t-butylperoxyisopropyl)benzene.

10. The method of claim 1, wherein the biodegradable resin is one or more selected from the group consisting of polylactic acid, polycaprolactone, polybutylene adipate terephthalate, polybutylene succinate, polyglycolic acid, polyhydroxyalkanoate, polyhydroxybutylate, a copolymer thereof, and a mixture thereof.

11. The method of claim 1, wherein the preparation of the biomass composite further includes extruding the biomass composite into pellets.

12. The method of claim 1, wherein the mixing of the biomass composite pellets with the biodegradable resin further includes extruding a resin mixture into pellets.

13. A biomass-based biodegradable resin composition prepared by the method according to claim 1.

14. A biodegradable film manufactured using the biomass-based biodegradable resin composition according to claim 13.

15. The biodegradable film of claim 14, wherein the film has a tensile strength ranging from 27 to 30 N/mm².

16. The biodegradable film of claim 14, wherein the film has a tear strength ranging from 96 to 131 N/mm.

17. The biodegradable film of claim 14, wherein the film has an elongation ranging from 580 to 670%.
